# EUROPÄISCHE PATENTSCHRIFT

(11) **EP 3 138 391 B1**
(45) Veröffentlichungstag und Bekanntmachung des Hinweises auf die Patenterteilung: **14.02.2018**
(21) Anmeldenummer: 16186484.8
(22) Anmeldetag: 31.08.2016
(51) Int. Cl.: A01G 17/02, A01G 17/14, E04H 12/16

(54) **STÜTZMASTEN, UND VERFAHREN UM DIESEN HERZUSTELLEN, INSBESONDERE STÜTZMASTEN FÜR HOPFENANLAGEN**
SUPPORT MASTS, AND METHOD OF PRODUCING SAME, IN PARTICULAR SUPPORT MASTS FOR HOP INSTALLATIONS
MATS DE SUPPORT ET LEUR PROCEDE DE FABRICATION, EN PARTICULIER MATS DE SUPPORT POUR HOUBLONNIERES

(30) Priorität: 02.09.2015 IT UB20153350
(43) Veröffentlichungstag der Anmeldung: 08.03.2017
(73) Patentinhaber: Schönthaler OHG- SNC, 39020 Eyrs Bolzano (IT)
(72) Erfinder: Schönthaler, Martin, 39020 Eyrs Bolzano (IT)
(74) Vertreter: Ausserer, Anton

(56) Entgegenhaltungen:
- WO-A1-90/08635
- CH-A5- 677 386
- FR-A1- 2 785 932
- GB-A- 893 539

## Beschreibung

Die vorliegende Erfindung bezieht sich auf einen Stützmasten und ein Verfahren um diesen herzustellen, insbesondere Stützmasten für Hopfenanlagen.

Es sind eine Vielzahl an Stützmasten in der Landwirtschaft bekannt. Die Stützmasten für Hopfenpflanzen sind ein besonderer Fall. Diese Masten haben eine Länge von zumindest 6 Meter, normalerweise variiert die Länge zwischen 7 Meter für interne Masten in der Reihe und 9-10 Meter für die Masten am Anfang oder am Ende einer Reihe.

Wegen ihrer Länge sind sie großen Belastungen ausgesetzt, zum Beispiel vom Wind verursacht. Zurzeit werden Holzmasten eingesetzt. Diese Holzmasten verfaulen aber und müssen deshalb gegebenenfalls ausgetauscht werden.

Aus der Veröffentlichung der Universität Regensburg aus dem Jahr 2010 von Ing. Stefanie Breitner und von Prof. Othmar Springer ergibt sich eine Analyse zum Stand der Technik für Stützmasten für Hopfen.

In dieser Abhandlung sind die verschiedenen Masten, die auf dem Markt sind, verglichen worden. Insbesondere wurden Masten aus Holz, aus Stahlbeton und Stahl verglichen.

Besonders Interessant ist die Analyse der Masten aus Stahlbeton. Aus der Veröffentlichung ergibt sich, dass geschleuderter Beton eingesetzt werden kann. Schleuderbeton wird durch ein aufwendiges und teures Verfahren hergestellt.

Wie in der Veröffentlichung der Universität von Regensburg beschrieben ist der Preis eines Masten der mittels dieses Verfahren hergestellt wurde, fünf mal teurer als ein Holzpfahl, welche mit Teer behandelt wurde um seine Lebensdauer zu verlängern. Deshalb wurden die Stahlbetonmasten nicht im Bereich des Hopfenanbaus eingesetzt.

Nach der Studie ist es möglich, die Masten mit Schleuderbeton herzustellen, aber mittels einer Vorspannung.

Außerdem wurden auch Masten aus gegossenem Beton getestet. Nach über 10 Jahren und verschiedenen Versuchen war man nicht im Stande Masten herzustellen, welche im Stande waren den Belastungen standzuhalten. Insbesondere brachen diese Masten bereits während der Montage, weil sie nicht einmal in Stande waren dem eigenen Gewicht standzuhalten. Deshalb ist aus dem Stand der Technik abzuleiten, dass die Masten nicht aus gegossenem Beton herzustellen waren. Aus FR 2 785 932 A1 ist ein Masten aus vorgespanntem Stahlbeton bekannt.

Die Aufgabe der vorliegenden Erfindung ist Masten für Hopfenfelder aus vorgespannten Beton und einer Stahlstruktur herzustellen.

Diese Aufgabe wird durch einen vorgespannten Masten aus Beton mit einer Stahlstruktur nach Anspruch 1 gelöst.

Es wird vorgeschlagen, einen erfindungsgemäßen Masten mit Beton herzustellen welcher einem Mindestquerschnitt von 100 cm², und Stahldrähte als Stahlstruktur aufweist. Der Mast weist eine Mindestlänge von 7 Meter auf. Der Spannbeton weist einen Mindestwiderstand von 50N/mm² auf. Die Stahldrähte weisen insgesamt einen Mindestquerschnitt von 170 mm² und die Spanndrähte sind mit einer Spannung von zumindest 200.000 N (200kN) vorgespannt.

Um die erfindungsgemäßen Masten herzustellen wird eine leere Form vorbereitet zum Beispiel mit einen Querschnitt von 14x14 cm und zum Beispiel mit einer Länge von 10m.

In einem zweiten Schritt werden Stahldrähte innerhalb der Form positioniert in einer bevorzugten Ausführungsform bilden vier verflochtene Drähte einen Litzen. Diese Litzen sind in bevorzugter Weise mit einem Abstand von 2 cm vom Rand der Form angeordnet. Diese Litzen werden mit einer Kraft von zumindest 200kN (kN steht für tausend Newton) vorgespannt. Diese Vorspannung kann durch eine Reihe von Zylindern erfolgen, welche am Anfang und am Ende der Form angeordnet sind.

In einem dritten Schritt wird der Beton gegossen, der dann in der Form gepresst und trocknen gelassen wird und am Ende der Trocknung weist er zumindest einen Widerstand von 50N/mm² auf.

Am Ende wird der Masten herausgenommen und in die bevorzugte Länge, von zumindest 7 Meter in bevorzugter Weise von 10 Meter geschnitten.

Diese so erhalten Masten können dann in den Hopfenfeldern eingesetzt werden, und können sowohl als Endmasten der Reihen als auch als interne Masten eingesetzt werden.

Dank der Vorspannung der Litzen/Drähte aus Stahl halten die Masten und können die Belastungen aushalten. Diese Belastungen werden vor allem durch die großen Abmessungen der Masten und durch die Biegekraft auf diese Art und Weise zum Beispiel durch den Wind erzeugt. Diese erzeugte Kraft hängt von der großen Angriffsfläche welche die Hopfenanlagen dem Wind bieten.

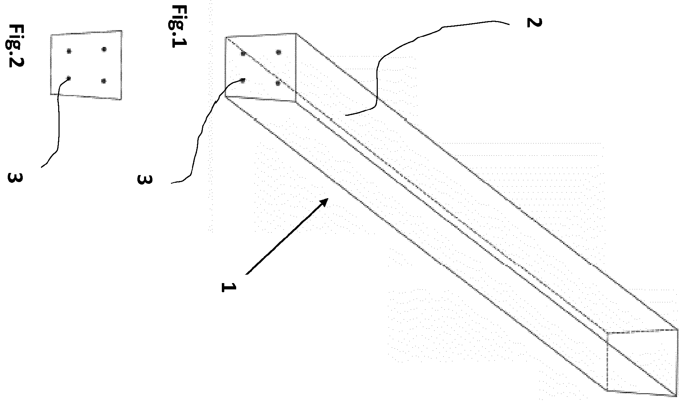

Weitere Merkmale und Details ergeben sich aus einer nicht begrenzender bevorzugten Ausführungsform der Erfindung, welcher in der nachfolgenden Beschreibung und in Bezug auf die folgenden Figuren erläutert wird. Es zeigen: die Figur 1 einen erfindungsgemäßen Masten und die Figur 2 ein Querschnitt eines erfindungsgemäßen Masten.

Mit der Bezugsziffer 1 wird ein erfindungsgemäßer Masten bezeichnet. Dieser Masten weist einen Mindestquerschnitt von 100 cm². Dieser Masten 1 wird mittels einer leeren Form hergestellt, in deren Inneren Stahldrähte angeordnet sind, welche einen Querschnitt von zumindest 170 mm² aufweisen. Diese Drähte 3 sind in bevorzugten Ausführungsform aus drei Drähten verflochtene Litzen. Diese Drähte/Litzen 3 werden mit einer Spannkraft von zumindest 200 kN vorgespannt.

Das Material, das für die Drähte/Litzen 3 verwendet wird, ist Stahl mit hohe Widerstand. Deshalb besitzen die Drähte/Litzen einen Zugfestigkeit von zumindest 1000N/mm², bevorzugt von über 1200N/mm².

Diese Drähte/Litzen sind bevorzugt mit einem Abstand von zumindest 2 cm vom Rand der Form angeordnet.

In einem zweiten Schritt wird die Form mit Beton 2 gefüllt, welcher nach der Trocknung einen Mindestwiderstand von 50N/mm² aufweist. Bevorzugter Weise ergibt sich einen Widerstand des Betons von über 60N/mm².

Die Länge der erhaltenen Masten beträgt zumindest 7 Meter in bevorzugter Weise 9 Meter.

In bevorzugter Weise weist die Form, in welcher die Masten hergestellt werden, eine Länge von 40 Meter auf. Außerdem sind bevorzugter Weise mehrere Formen nebeneinander angeordnet.

Der Masten 1 wird in der Form vor der Herausnahme zugeschnitten.

Der Masten 1 wird erfindungsgemäß nach dem hier folgendem beschriebenen Verfahren hergestellt, das die folgenden Schritte umfassen:
- Vorbereitung einer leeren Form mit einem Querschnitt von zumindest 100cm²
- Anordnung von Drähten 3 aus Stahl welche zusammen mindestens einen Querschnitt von 170mm² aufweisen,
- Spannung der Drähte aus Stahl mit einer Kraft von zumindest 200kN,
- Füllung der Form mittels Beton 2 mit einem Widerstand, getrocknet, von 50N/mm².

In einer bevorzugten Ausführungsform sind die Stahldrähte Litzen.

In einer weiteren, vorteilhaften Ausführungsform sind die Drähte/Litzen 3 mit einem Mindestabstand von 2 cm zum Rand der Form angeordnet.

In einer weiteren bevorzugten Ausführungsform hat die Form eine Länge von zumindest 40m.

Es ist klar, dass an den vorstehenden Ausführungen der Erfindung für den Fachmann offensichtliche Zusätze, Änderungen oder Varianten vorgenommen werden können ohne den Schutzbereich zu verlassen, der durch die Patentansprüche festgelegt wird.

## Patentansprüche

1. Masten (1) aus präkomprimierten Beton mit einer Stahlstruktur und einem Mindestquerschnitt von 100 cm², und welcher Stahldrähte (3) umfasst als Stahlstruktur, **dadurch gekennzeichnet dass** der Masten (1) eine Mindestlänge von 7 Meter aufweist, dass der präkomprimierten getrocknete Beton (2) eine Mindestresistenz von 50N/mm² aufweist, und dass die Stahldrähte (3) einem Mindestquerschnitt in Ihrer Gesamtheit von zumindest 170mm² aufweisen und dass die genannten Drähte mit einer Kraft von zumindest 200 kN vorgespannt sind.

2. Masten (1) nach Anspruch 1, **dadurch gekennzeichnet dass** die Drähte (3)im inneren mit einer Distanz von mindestens 2 cm vom Rand angeordnet sind.

3. Masten (1) nach einem der vorgehenden Ansprüche, **dadurch gekennzeichnet dass** die Länge des Masten zumindest 9 Meter beträgt.

4. Masten (1) nach einem der vorgehenden Ansprüche, **dadurch gekennzeichnet dass** die Drähte zumindest vier sind.

5. Masten (1) nach einem der vorgehenden Ansprüche, **dadurch gekennzeichnet dass** die Drähte (3) als Litzen (3) angeordnet sind.

6. Masten (1) nach einem der vorgehenden Ansprüche, **dadurch gekennzeichnet dass** die Drähte (3)/Litzen (3) eine Zugfestigkeit von zumindest 1000N/mm² aufweisen.

7. Masten (1) nach einem der vorgehenden Ansprüche, **dadurch gekennzeichnet dass** der getrocknete Beton eine Resistenz von zumindest 60 N/ mm² aufweist.

8. Verfahren zur Herstellung eines Masten nach einem der vorhergehenden Ansprüche **dadurch gekennzeichnet** folgenden Schritte zu umfassen:
- Vorbereitung einer leeren Form mit einem Querschnitt von zumindest 100cm²
- anordnung von Drähten (3) aus Stahl welche zusammen mindestens einen Querschnitt von 170mm² aufweisen,
- Spannung der Drähte aus Stahl mit eine Kraft von zumindest 200kN,
- Füllung der Form mittels Beton (2) mit einer Resistenz getrocknet von 50N/mm².

## Claims

1. A prestressed-concrete pile (1) with a steel structure, having a minimum section area of 100 cm², and comprising steel wires (3) as steel structure, **characterized in that** the pile (1) has a minimum length of 7 meters, **in that** the dried prestressed concrete (2) has a minimum strength of 50 N/mm², and **in that** the steel wires (3) have a minimum cross-section overall of at least 170 mm² and **in that** said wires are prestressed with a force of at least 200 kN.

2. A pile as claimed in claim 1, **characterized in that** the wires (3) are internally arranged at a minimum distance of 2 cm from the edge.

3. A pile (1) as claimed in any of the preceding claims, **characterized in that** the length of the pile is at least 9 meters.

4. A pile (1) as claimed in any of the preceding claims **characterized in that** it has at least 4 wires.

5. A pile (1) as claimed in any of the preceding claims **characterized in that** the wires (3) are provided in the form of strands (3).

6. A pile (1) as claimed in any of the preceding claims, **characterized in that** the wires (3)/strands (3) have a tensile strength exceeding 1000 N/mm².

7. A pile (1) as claimed in any of the preceding claims, **characterized in that** the concrete has a strength exceeding 60 N/mm².

8. A method of manufacturing a pile as claimed in any of the preceding claims, **characterized in that** it comprises the steps of:
- preparing an empty mold having a section area of at least 100 cm²,
- arranging steel wires (3) with an overall section area of at least 170 mm²
- tensioning the steel wires with a force of at least 200 kN,
- filling the mold with a concrete (2) having a strength of at least 50 N/mm² when dried.

## Revendications

1. Pieu en béton précontraint (1) avec une structure en acier, ayant une section minimale de 100 cm², et comprenant des fils en acier (3) comme structure en acier, **caractérisée en ce que** la pile (1) a une longueur minimale de 7 mètres, **en ce que** le béton précontraint séché (2) a une résistance minimale de 50 N/mm², et **en ce que** les fils en acier (3) ont une section transversale minimale dans leur ensemble d'au moins 170 mm² et **en ce que** lesdits fils sont précontraints avec une force d'au moins 200 kN.

2. Pieu selon la revendication 1, **caractérisé en ce que** les fils (3) sont agencés à l'intérieur à une distance minimale de 2 cm du bord.

3. Pieu (1) selon n'importe laquelle des revendications précédentes, **caractérisé en ce que** la longueur du pieu est d'au moins 9 mètres.

4. Pieu (1) selon n'importe laquelle des revendications précédentes, **caractérisé en ce qu'**il comporte au moins 4 fils.

5. Pieu (1) selon n'importe laquelle des revendications précédentes, **caractérisé en ce que** les fils (3) sont en forme de torons (3).

6. Pieu (1) selon n'importe laquelle des revendications précédentes, **caractérisé en ce que** les fils (3)/torons (3) ont une résistance à la traction supérieure à 1000 N/mm².

7. Pieu (1) selon n'importe laquelle des revendications précédentes, **caractérisé en ce que** le béton a une résistance supérieure à 60 N/mm².

8. Procédé de fabrication d'un pieu selon n'importe laquelle des revendications précédentes, **caractérisé en ce qu'**il comprend les étapes consistant à :
- préparer une moule vide ayant une section d'au moins 100 cm²,
- disposer des fils en acier (3) avec une section totale d'au moins 170 mm²,
- mettre les fils en acier sous tension avec une force d'au moins 200 kN,
- remplir la moule avec un béton (2) ayant une résistance d'au moins 50 N/mm² à l'état séché.
